# DEMANDE DE BREVET EUROPEEN

(11) **EP 4 327 775 A2**
(43) Date de publication de la demande: **28.02.2024**
(21) Numéro de dépôt: 24152012.1
(22) Date de dépôt: 29.01.2019
(51) Int. Cl.: A61C 17/06

(54) **PORTE-EMPREINTE ELECTRONIQUE POUR LE CAPTAGE D'INFORMATION DENTAIRE**

(30) Priorité: 29.01.2018 FR 1850689
(62) Demande divisionnaire de: 19707857.9
(71) Demandeur: Duret, François, 11560 Fleury d'Aude (FR); De Vreese, Guy, 9000 Gent (BE)
(72) Inventeur: Duret, François, 11560 Fleury d'Aude (FR); De Vreese, Guy, 9000 Gent (BE)
(74) Mandataire: Rhein, Alain

(57) **Abrégé**

Porte-empreinte électronique utilisable pour la prise de mesures tridimensionnelles et temporelles dans le domaine dentaire, il consiste en un dispositif comprenant des systèmes de capteurs de mesure optique (C), un système électronique qui comporte une unité centrale de gestion apte à collecter, stocker et ordonner les données relevées par lesdits capteurs, tandis que lesdits capteurs sont répartis sur tout ou partie du porte-empreinte pour permettre de réaliser une empreinte optique de tout ou partie d'une arcade dentaire en une ou plusieurs prises.

Il consiste en une pièce présentant la forme de tout ou partie d'une arcade dentaire, et qui comporte des moyens (3) de réglage de profondeur par la prise d'appui sur les dents, sur la surface occlusale et/ou sur les surfaces vestibulaires ou linguale, et consistant en au moins une paroi transparente (31) s'étendant au-dessus des capteurs (C).

## Description

La présente invention a pour objet un système de prise d'empreinte électronique permettant de prendre une vue tridimensionnelle de tout ou partie d'une arcade dentaire, pour le captage d'information dentaire.

La présente invention a plus particulièrement pour but de proposer un porte empreinte électronique utilisable pour la prise de mesures tridimensionnelles et temporelles dans le domaine dentaire, et qui consiste en un dispositif comprenant des systèmes de capteurs de mesure optique, associés éventuellement à des senseurs ultrason et/ou OCT (optique cohérente tomographique), un système électronique qui comporte une unité centrale de gestion apte à collecter, stocker et ordonner les données relevées par lesdits capteurs, tandis que lesdits capteurs sont répartis sur tout ou partie dudit porte-empreinte pour permettre de réaliser une empreinte optique en une ou plusieurs prises.

Le présent inventeur a déjà proposé des moyens de réaliser des diagnostics et des prothèses dentaires en utilisant des mesures optiques ou ultrasonique dans la bouche d'un patient, et qui, en association avec des moyens informatiques, permettent de concevoir et de suivre les différentes étapes de l'acte clinique, pour conduire à la réalisation de prothèses sur une machine ou en communiquant avec ses confrères pour une recherche de diagnostics.

Ses nombreux travaux l'ont conduit à la réalisation de nombreuses inventions décrites dans des brevets tels que, notamment mais non limitativement, EP0040165 et EP0091876, relatifs à une prise d'empreinte par des moyens optiques, puis plus récemment dans un nouveau brevet WO2011154656.

Si ces documents correspondent effectivement aux besoins de la dentisterie moderne, en particulier tel que ce qui est décrit dans le document WO 2011154656, il s'avère qu'à l'usage, la mise en oeuvre de ces inventions a nécessité des recherches supplémentaires pour faciliter leur exploitation.

On connaît par ailleurs documents dans lesquels sont proposées d'autres solutions.

C'est le cas par exemple du document US 2017100219, qui propose un porte-empreinte comprenant des moyens capteurs aptes à prendre une empreinte d'au moins une partie d'une dent ou d'un ensemble de dents, lesdits moyens capteurs étant associé avec un matériau de moulage, utilisé habituellement pour les prises d'empreintes, en sorte qu'un tel porte-empreinte ne peut pas donner satisfaction.

On connaît également par le document US2015118638, un porte-empreinte constitué d'un plateau ou d'une goulotte, et équipé moyens capteurs permettant d'obtenir des images qui, combinées, sont destinées à déterminer la profondeur de sulcus chez un individu édenté en vue de son appareillage. Une tel porte-empreinte ne permet pas le captage d'information dentaire.

On connaît aussi par le document US2017128173 un dispositif de balayage comprenant une poignée destinée à être tenue par un opérateur et un embout buccal comprenant un scanner 3D ainsi que des moyens de déplacement dudit scanner 3D à l'intérieur dudit embout buccal. Si un tel appareil peut être considéré comme d'un usage simple, son usage présente des limites. En effet, quelles que soient les possibilités de mouvement du scanner 3D à l'intérieur de l'embout buccal, toutes les surfaces ne peuvent pas être atteintes avec la même précisions, si elles peuvent être atteintes.

Il s'avère que la connaissance des contours osseux, associée à l'empreinte optique, oblige à des manipulations complexes et a des connaissances très importantes, ce qui a conduit à la nécessité de concevoir un système de porte empreinte global devant répondre à un cahier de charges.

Selon ce cahier des charges, le porte-empreinte électronique doit tout d'abord être simple d'utilisation pour le praticien et sa mise en bouche doit être spontanée, courte et rapide. Pour le patient elle ne doit pas être traumatisante.

En particulier sa forme doit être adaptée aux différentes formes d'arcade ou, encore, les lumières utilisées ne doivent pas éblouir des capteurs choisis car ils sont particulièrement réduits en volume.

Comme la zone à mesurer est limitée par les joues et la gencive, le nombre de capteurs doit être suffisamment élevé pour que la surface visée soit totalement recouverte par la lecture. L'encombrement doit lui aussi être réduit à son plus strict minimum et ceci élimine d'emblée tout système utilisant la projection de lumière structurée. Doivent donc être utilisés des systèmes passifs comme la stéréoscopie et l'OCT ou des systèmes mettant en oeuvre des émetteurs et des capteurs très réduits ou fusionnés comme dans l'ultra-son.

Il faut aussi donner la possibilité de potentialiser l'empreinte optique en bouche, qui reste un acte pénalisant pour le patient, en recueillant en même temps, ou en temps très proche, la forme des surfaces dentaires et leurs teintes, les surfaces gingivales, les mouvements des arcades les unes par rapport et même, si le temps le permet, les contours osseux.

La présente invention a pour objet de répondre à tous ces besoins, à moindre cout, en satisfaisant le patient par son confort et sa rapidité mais aussi sans obliger le praticien à avoir une formation trop complexe ou trop longue, tout en gardant un investissement raisonnable.

Ainsi, le porte empreinte électronique selon l'invention est utilisable pour la prise de mesures tridimensionnelles et temporelles dans le domaine dentaire, il consiste en un dispositif comprenant des systèmes de capteurs de mesure optique, un système électronique qui comporte une unité centrale de gestion apte à collecter, stocker et ordonner les données relevées par lesdits capteurs, tandis que lesdits capteurs sont répartis sur tout ou partie dudit porte-empreinte pour permettre de réaliser une empreinte optique de tout ou partie d'une arcade dentaire en une ou plusieurs prises, et il se caractérise en ce qu'il consiste en une pièce présentant la forme de tout ou partie d'une arcade dentaire, et qui est de conception évolutive au travers de facultés de déformabilité et/ou d'une construction en plusieurs éléments articulés entre eux et/ou assemblables et solidarisables de manière réversible, en sorte de présenter la forme optimale.

Selon une caractéristique additionnelle du porte-empreinte électronique selon l'invention, les capteurs de mesure optique sont associés à des senseurs à ultrason et/ou OCT (optique cohérente tomographique) .

Selon une autre caractéristique additionnelle du porte-empreinte électronique selon l'invention il est réalisé en un matériau déformable tel qu'une matière thermoplastique ou une résine souple, ne revenant pas à la forme d'origine après adaptation dans la bouche du patient.

Selon une autre caractéristique additionnelle du porte-empreinte électronique selon l'invention, sa partie active, équipée de capteurs, présente une forme adaptée ou adaptable par déformation, aux particularités de l'occlusion.

Selon une autre caractéristique additionnelle du porteélectronique selon l'invention, il est réalisé en au moins deux éléments solidarisables, chacun adapté à la prise d'empreinte d'au moins une partie d'une arcade, et en ce que lesdits au moins deux éléments sont configurés en sorte que des capteurs d'au moins l'un d'eux s'associent à des capteurs d'un autre élément, de manière que l'empreinte optique d'au moins une partie de l'arcade soit réalisée avec des capteurs desdits au moins deux éléments.

Selon une autre caractéristique additionnelle du porteélectronique selon l'invention, les au moins deux éléments solidarisables sont conformés pour être solidarisés, de manière réversible, par emboîtement.

Selon une autre caractéristique additionnelle du porteélectronique selon l'invention, les au moins deux éléments solidarisables sont conformés pour être solidarisés magnétiquement.

Selon une autre caractéristique additionnelle du porte-empreinte électronique selon l'invention, il comporte des moyens de réglage de profondeur consistant en des moyens de prise d'appui sur les dents.

Selon une autre caractéristique additionnelle du porte-empreinte électronique selon l'invention, les moyens de prise d'appui sur les dents consistent en au moins une lame, tige ou analogue, faisant saillie entre les capteurs.

Selon une autre caractéristique additionnelle du porte-empreinte électronique selon l'invention, les moyens de prise d'appui sur les dents consistent en au moins une paroi transparente, s'étendant au-dessus des capteurs.

Selon une autre caractéristique additionnelle du porte-empreinte électronique selon l'invention, la paroi transparente présente des repères.

Selon une autre caractéristique additionnelle du porte-empreinte électronique selon l'invention la paroi transparente est déformable.

Selon une autre caractéristique additionnelle du porte-empreinte électronique selon l'invention, la paroi transparente est associée en contact glissant à une autre paroi transparente, qui coopère avec des moyens, motorisés ou non, aptes à générer un mouvement de frottement entre lesdites parois transparentes.

Selon une autre caractéristique additionnelle du porte-empreinte électronique selon l'invention, il comporte un système d'aspiration périphérique et /ou central, et/ou un système de jet d'eau et/ou de d'air.

Selon une autre caractéristique additionnelle du porte-empreinte électronique selon l'invention, il comporte des moyens de projection de lumière passive, non structurée, pour éclairer l'intérieur de la bouche.

Selon une autre caractéristique additionnelle du porte-empreinte électronique selon l'invention, il est de couleur noire afin de ne pas gêner la prise d'informations.

Selon une autre caractéristique additionnelle du porte-empreinte électronique selon l'invention, sa partie comportant les capteurs, est désolidarisée du reste du porte-empreinte et connectée à ce dernier au travers de moyens filaires ou d'un système de communication sans fil.

Les avantages et les caractéristiques du porte-empreinte électronique selon l'invention, ressortiront plus clairement de la description qui suit et qui se rapporte au dessin annexé, lequel en représente plusieurs modes de réalisation non limitatifs.

Dans le dessin annexé :
- les figures 1a, 1b, 1c et 1d représentent des vues schématiques en plan de différents modes de réalisation d'un porte-empreinte électronique selon l'invention.
- les figures 2a, 2b et 2c représentent des vues schématiques en perspective d'un autre mode de réalisation du porte-empreinte électronique selon l'invention dans des configurations différentes d'utilisation.
- les figures 3a et 3b, et 4 représentent des vues schématiques en coupe d'un porte-empreinte électronique selon l'invention dans des configurations différentes d'utilisation.
- la figure 5 représente une vue schématique en perspective et en éclaté d'un mode de réalisation particulier du porte-empreinte électronique selon l'invention.
- les figures 6a, 6b et 6c représentent des vues schématiques en plan d'un autre mode de réalisation d'un porte-empreinte électronique selon l'invention dans des configurations différentes d'utilisation.
- la figure 7a représente une schématique partielle en plan d'un porte-empreinte électronique selon l'invention, selon une variante de construction.
- la figure 7b représente une vue schématique en coupe de la figure 7a.
- la figure 8a représente une schématique partielle en plan d'un porte-empreinte électronique selon l'invention, selon une variante de construction.
- la figure 8b représente une vue schématique en coupe de la figure 8a.
- les figures 9a, 9b, 9c, 10a et 10b, représentent des vues schématiques en plan d'un porte-empreinte électronique selon l'invention, selon différentes variante de réalisation.
- la figure 11a représente une vue schématique en plan d'un autre mode de réalisation d'un porte-empreinte électronique selon l'invention.
- les figures 11b et 11c représentent le même porte-empreinte des configurations différentes d'utilisation.
- les figures 12a et 12b représentent des vues schématiques en plan d'une variante du porte-empreinte électronique selon l'invention.
- les figures 13a et 13b représentent des vues schématiques en perspective de parties de porte-empreintes électronique selon l'invention, dans la cadre d'une disposition particulière.
- les figures 14a, 14b et 14c représentent des vues schématiques d'un autre mode de réalisation du porte-empreinte électronique selon l'invention.
- la figure 15 représente une vue schématique partielle et en perspective d'un élément du porte-empreinte électronique des figures 14a, 14b et 14c.
- les figures 16a et 16b représentent des vues schématiques partielles et en perspective d'une variante du mode de réalisation du porte-empreinte optique des figures 14a, 14b et 14c.
- les figures 17a et 17b représentent des vues schématiques partielles et en perspective d'évolutions de la variante du mode de réalisation du porte-empreinte électronique des figures 14a, 14b et 14c.
- la figure 18 représente une vue schématique en coupe d'un porte-empreinte électronique conforme aux figures 14a, 14b et 14c.
- la figure 19 représente une vue schématique en perspective d'un porte-empreinte électronique selon l'invention, équipé d'une option.
- la figure 20 représente une vue en perspective d'une installation de prise d'empreinte électronique dans son ensemble chez un praticien.
- les figures 21a et 21b représentent deux modes de mise en oeuvre du porte-empreinte électronique selon l'invention.

La présente invention se compose d'un porte-empreinte comprenant des caméras et des moyens de projection de lumière, destinés à être disposé en regard d'une arcade dentaire ou partie d'une arcade.

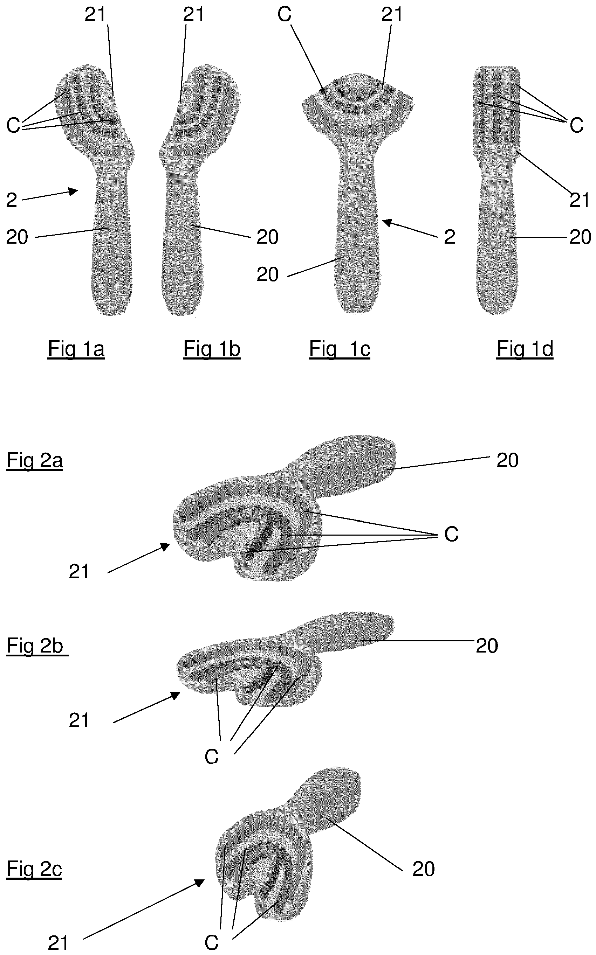

En référence aux figures 1a, 1b, 1c et 1d, on peut voir différents types de porte-empreinte électronique 1 selon l'invention, lesquels comportent une pièce 2 équipées de séries de capteurs de mesure optique C, arrangées selon l'usage auquel est destiné le porte-empreinte, en l'occurrence, les différents types de porte-empreinte 1 représentés sur ces figures permettent chacun la prise d'empreinte d'une partie définie d'une arcade dentaire.

La pièce 2 présente essentiellement deux parties, une partie 20 constituant un manche de préhension par le praticien, et une partie 21 active, qui comporte les capteurs C.

Ainsi, les figures 1a et 1b représentent des porte-empreinte 1 destinés à la prise d'empreinte d'une hémi-arcade, et les figures 1c et 1d des porte-empreinte 1 pour la prise d'empreinte d'une partie d'une arcade.

On notera que la partie comporte de manière préférentielle des moyens, non représentés disposés entre les séries de capteurs C, de projection de lumière passive, non structurée, produite par des LEDs simples ou laser ou de l'halogène pour simplement éclairer l'intérieur de la bouche mais ne servant pas comme vecteur de mesure.

En référence aux figures 2a, 2b et 2c on peut voir un porte-empreinte 1 destiné à la prise d'empreinte d'une arcade complète, la partie active 21 étant en forme d'arc de cercle. Un tel porte-empreinte 1 peut être adapté à la prise d'empreinte de l'arcade supérieure et de l'arcade inférieure.

De manière avantageuse, la pièce 2 peut être, non limitativement, réalisée dans un matériau déformable tel qu'une matière thermoplastique ou une résine souple, et de préférence ne revenant pas à la forme d'origine après adaptation dans la bouche du patient.

Dans ce cas, les capteurs, ainsi que les moyens de projection de lumière, sont prévus aptes, durant la déformation d'ajustement à la bouche du patient, à se déplacer unitairement ou par groupes, afin de ne pas trop éloigner leurs positions spatiales connues et calibrées.

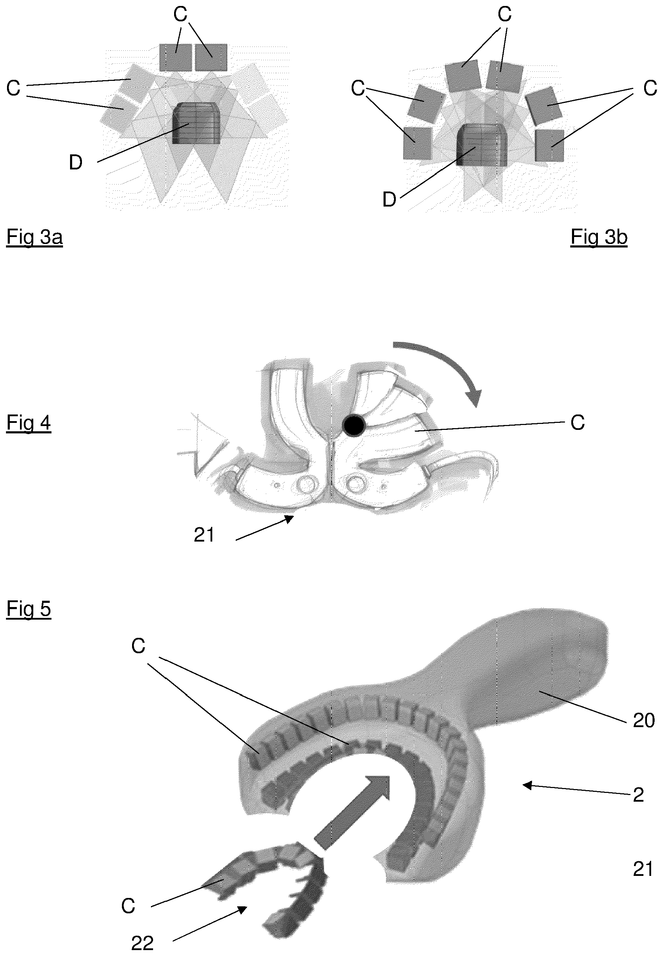

Tel que cela apparaît sur les figures 3a et 3b, les capteurs peuvent être, non limitativement, disposés par paires sur le porte-empreinte, non représenté, et par exemple articulés l'un à l'autre dans chaque paire, pour entourer une ou plusieurs dents D, de manière optimale, tout en restant dans un même plan.

La figure 4 montre ainsi deux porte-empreintes dont l'un est représenté dans différentes positions, au travers d'une articulation R par exemple, tandis que l'autre demeure immobile.

En référence maintenant à la figure 5, on peut voir une autre possibilité de modularité d'un porte-empreinte 1 selon l'invention, notamment en ce qu'une série complète de capteurs C est amovible, en sorte de pouvoir ou non capturer des mesures.

En l'occurrence, la partie active 21 de la pièce 2 présente une arcade complète et, non limitativement, deux séries parallèles en arc de cercle de capteurs C, et un élément 22 est assujetti à la partie active 21, cet élément 22 comportant une troisième série de capteurs, augmentant ainsi la précision, la résolution et/ou la surface de mesure.

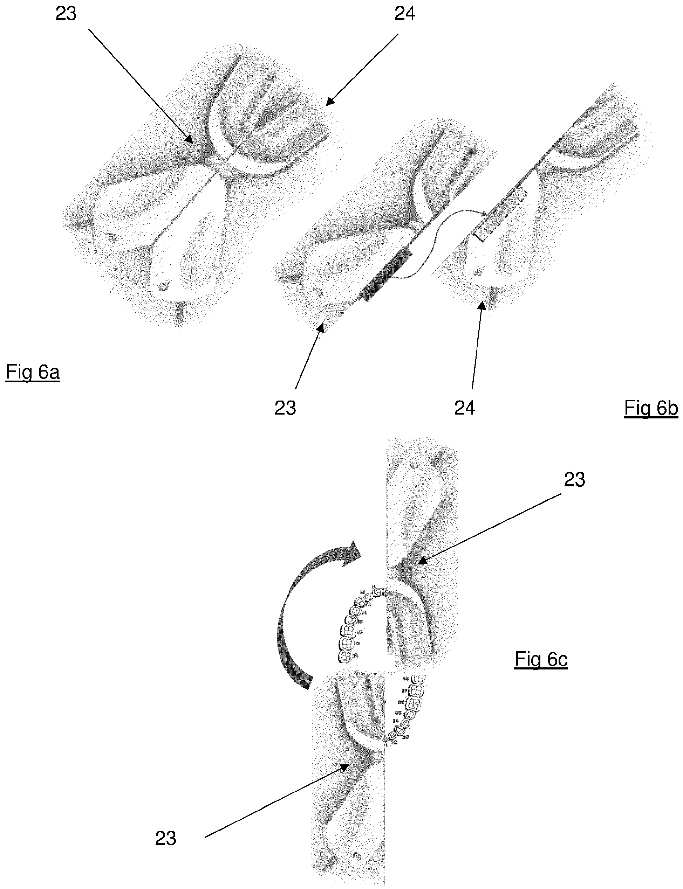

En référence aux figures 6a, 6b et 6c, on peut voir un porte-empreinte 2 fait de deux parties assemblables 23 et 24, correspondant chacune, au niveau de leur partie active, à une hémi arcade, qu'il est possible d'utiliser séparément, ou ensemble pour la prise d'empreinte d'une arcade, la solidarisation étant réalisée, non limitativement, mécaniquement ou magnétiquement, au travers d'un moyen N. On notera qu'il est possible de prévoir plus de deux parties assemblables.

Cette configuration permet de simplifier et de réduire le nombre de porte-empreintes puisque le porte empreinte 23 de l'hémi-arcade supérieure gauche, correspond au porte empreinte de l'hémi arcade inférieure droite, en sorte que deux porte-empreintes 23 et 24 permettent de faire les quatre hémi-arcade mais aussi, en les réunissant de faire les deux arcades complètes hautes et basses.

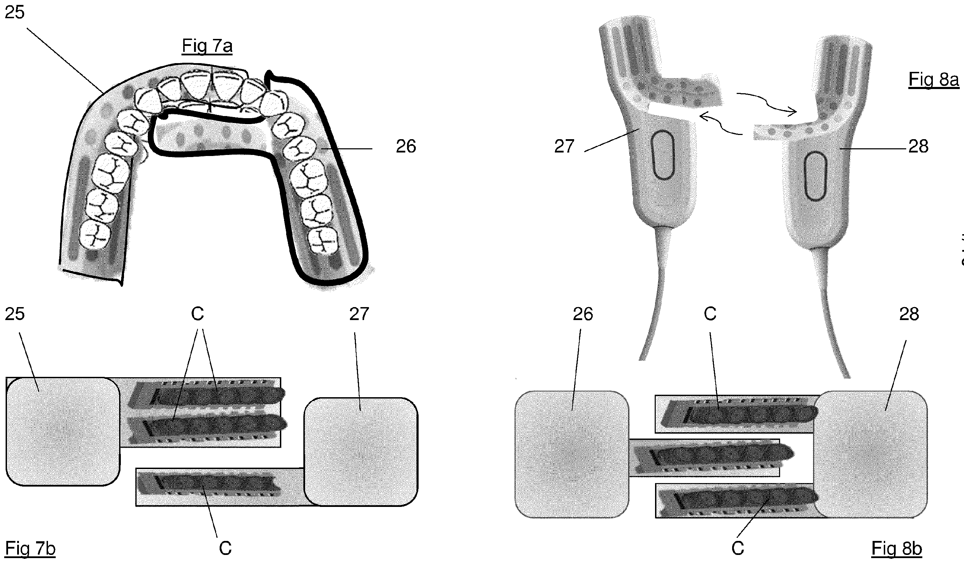

En référence aux figures 7a et 7b, et 8a et 8b, on peut voir, selon d'autres configurations, où le porte-empreinte est également réalisé en deux éléments, 25 et 26, et 27 et 28, qu'après assemblage des deux éléments, des capteurs C de l'un des éléments, se combinent avec des capteurs C de l'autre élément, réalisant ainsi la parfaite fusion de la prise d'empreinte des deux hémiarcades, car ils appuient leurs mesures sur une partie du même objet (les faces d'une ou plusieurs dents) indéformables et commune aux différents portes empreintes. Par exemple ce peut être pour les capteurs d'un porte-empreinte, les faces vestibulaires, alors que pour les capteurs de l'autre porte-empreinte ce sera les surfaces occlusales et linguales de mêmes dents.

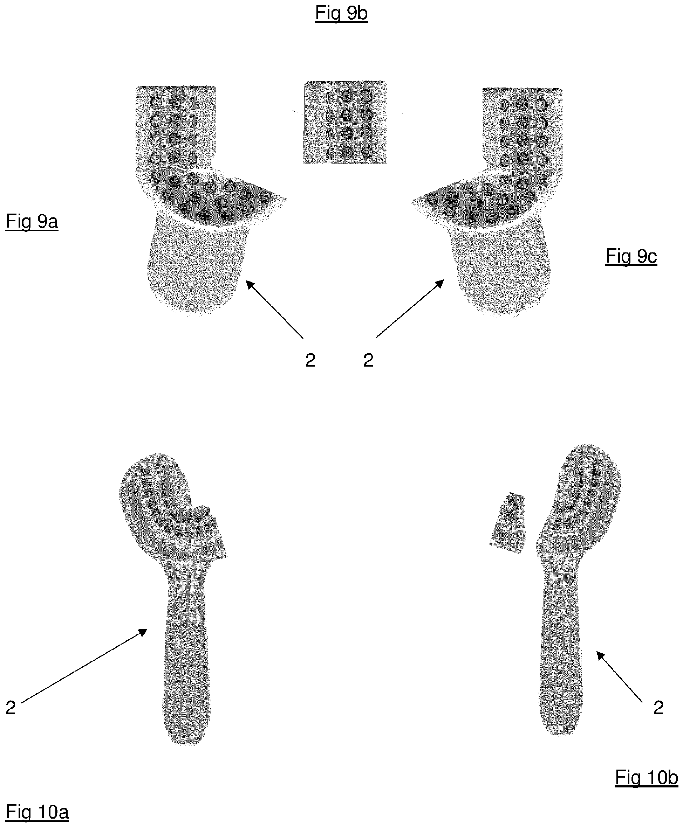

En référence aux figures 9a, 9b et 9c, et aux figures 10a et 10b, on peut voir qu'il est possible de prévoir des éléments assemblables l'un à l'autre avec enlèvement préalable d'une partie de l'autre.

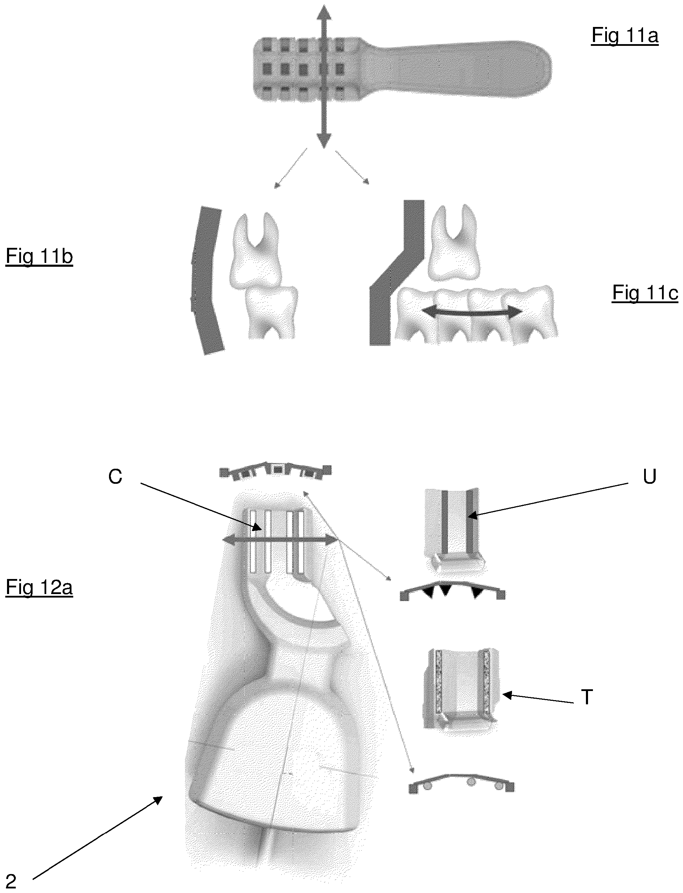

En référence à la figure 11a, on peut voir que la partie active 21 peut se présenter sous la forme d'un plateau présentant une forme particulière, par exemple courbe, adaptée, éventuellement adaptable, aux particularités de l'occlusion, en sorte de permettre la prise de vue des arcades haut et bas en occlusion.

Sur la figure 11b la partie active 21 est de forme concave en regard des dents, sur la figure 11c elle présente un décrochement, afin de mesurer les désengrènement, valeur fondamentale dans les mouvements d'occlusion et permettant de définir la modélisation dynamique de la surface occlusale sans avoir recours aux systèmes complexes des arcs faciaux mécaniques ou électroniques.

On notera qu'en associant aux capteurs optiques un système de senseurs à ultrason et/ou un système OCT (optique cohérente tomographique), cela permet d'avoir une vue latérale incluant la surface osseuse mais aussi une partie sous émail des dents afin de limiter les expositions aux rayons X pendant certains traitements comme celui se rapportant à la couronne ou à la racine dentaire.

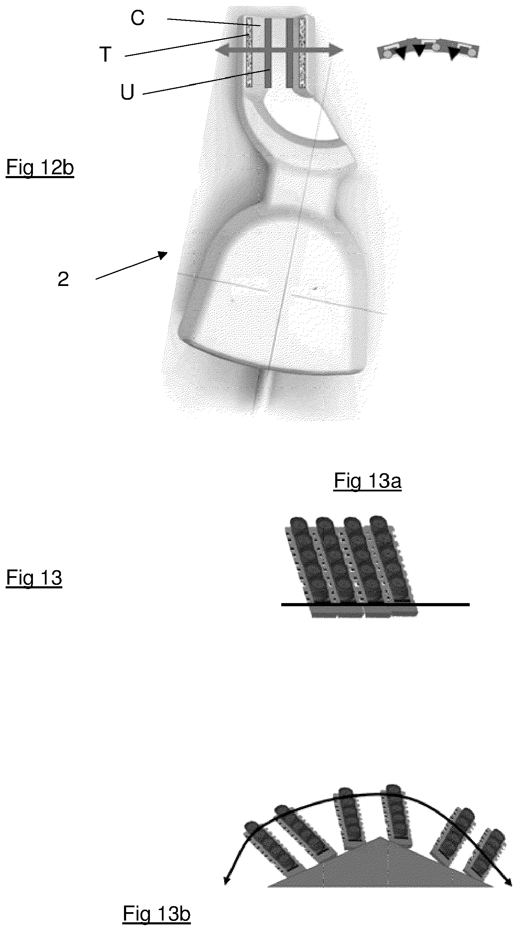

En référence aux figures 12a et 12b, on peut voir un dispositif porte-empreinte selon l'invention, aux capteurs optiques C duquel on peut adjoindre optionnellement, des senseurs un système à ultrason U et/ou un système OCT T (optique cohérente tomographique). Ces différents systèmes peuvent être amovible, comme cela est représenté sur la figure 12a, ou à demeure comme cela est représenté sur la figure 12b, avec possibilité d'activer l'un et/ou les autres systèmes.

Il est ainsi possible de choisir le type de mesure que l'on souhaite, avec l'avantage de pouvoir choisir quelle mesure doit être prédominante.

En référence maintenant aux figures 13, on peut voir la présence d'un système de calibration permettant à tout instant de vérifier le bon positionnement des capteurs et senseurs des différentes méthodes d'analyse durant la durée de vie du porte empreinte, surtout pour le contrôle du positionnement des parties optiques C et OCT T, mais aussi pour rééquilibrer la position des senseurs et faire connaître au système de traitement de l'image la position des capteurs après déformation et adaptation en bouche du patient par le clinicien. Ce système de calibrage SC peut avoir une forme plane ou courbe pour pouvoir s'insérer dans les portes empreintes.

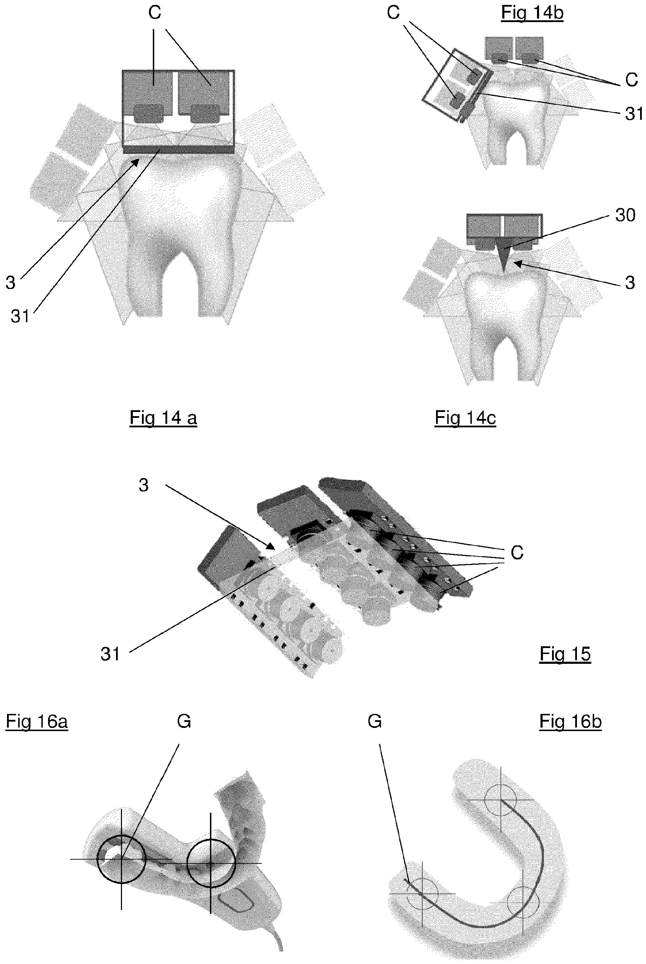

En référence maintenant aux figures 14, on peut voir qu'il est prévu de pouvoir s'appuyer ou non sur les dents afin de positionner idéalement les surfaces mesurées dans le plan focal qui est la zone de haute précision. Ce point d'appui portant sur la surface occlusale comme sur la figure 14a, et/ou sur les surfaces vestibulaires ou linguale, comme sur la figure 14b, dans le cas du capteur d'occlusion.

L'appui sur les dents D peut être réalisé de plusieurs manières, au travers d'un espaceur 3 tel qu'une tige, une pointe, une boule ou une lame 30, visible sur la figure 14c, ou bien une paroi transparente 31, telle qu'une vitre par exemple, visible sur les figures 14a et 14b.

La paroi transparente 31 peut recouvrir partiellement ou totalement la surface occlusale et/ou les surfaces vestibulaires et/ou linguales, telle que cela est représenté sur la figure 15.

On notera qu'avantageusement dans le cas d'utilisation de parois transparentes 31, ces dernières pourront porter des gravures ou cibles G représentées sur les figures 16a et 16b, visibles sur l'écran de l'ordinateur et permettant de bien positionner le porte-empreinte dans la zone désirée avant la lecture mais aussi de suivre le déroulement de la prise empreinte durant la lecture.

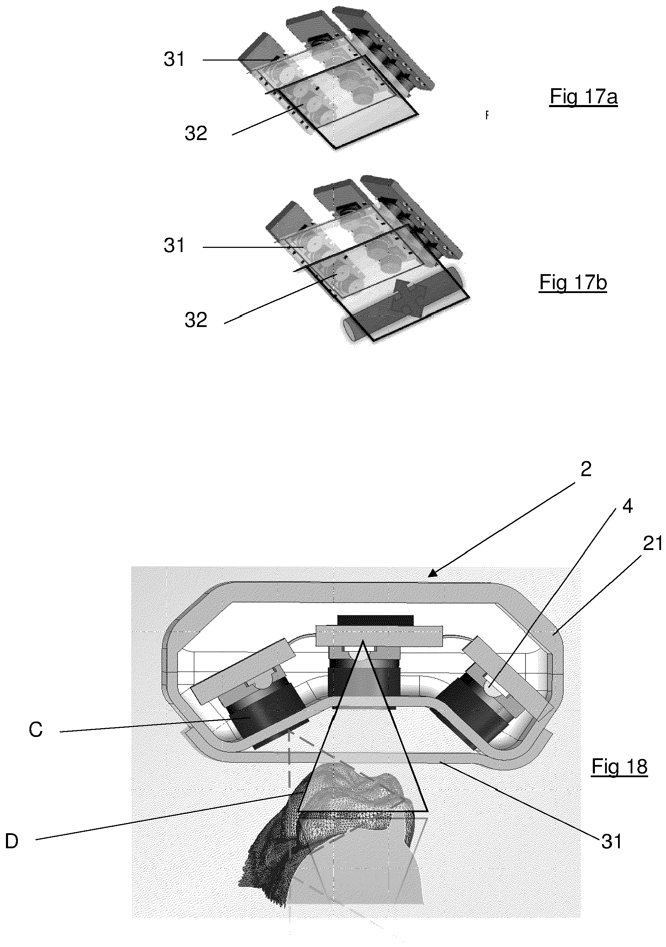

Egalement de manière avantageuse, dans certains cas de prise de vue stéréoscopique dynamique, la calibration et la mise à l'échelle exigent un léger mouvement au démarrage de l'empreinte. Pour faciliter ce mouvement, il est ajouté une seconde paroi transparente 32 glissant sur la première 31 dans les limites du mouvement accepté, tel que cela est représenté sur les figures 17a et 17b, sur cette dernière est représenté un moteur M qui permet de générer le mouvement de frottement.

Le système d'éclairage est préférentiellement périphérique à la ou les parois transparentes, 31, 32, pour éviter les réflexions sur les surfaces pouvant gêner la bonne lecture.

Il est toutefois possible de disposer, en référence à la figure 18, un système d'éclairage 4, de type LED par exemple, derrière la ou les parois transparentes 31, la glace étant alors choisie la plus non réflective possible et la projection de la lumière sera faite de telle sorte que son axe optique et sa réflexion si elle existe, arrivent le moins possible dans la zone mesurée.

Pour éviter ce type de réflexion, les projections de lumière conduisant à un balayage lumineux devront être toujours éloigné et le moins possible de proche en proche. Ainsi durant le flash de balayage, si le premier flash est dans la zone de début du porte-empreinte, le 2^{ème} sera préférentiellement dans la zone opposée donc de fin puis le 3^{ème} flash dans la zone de début puis le 4^{ème} dans la zone de fin et ainsi de suite.

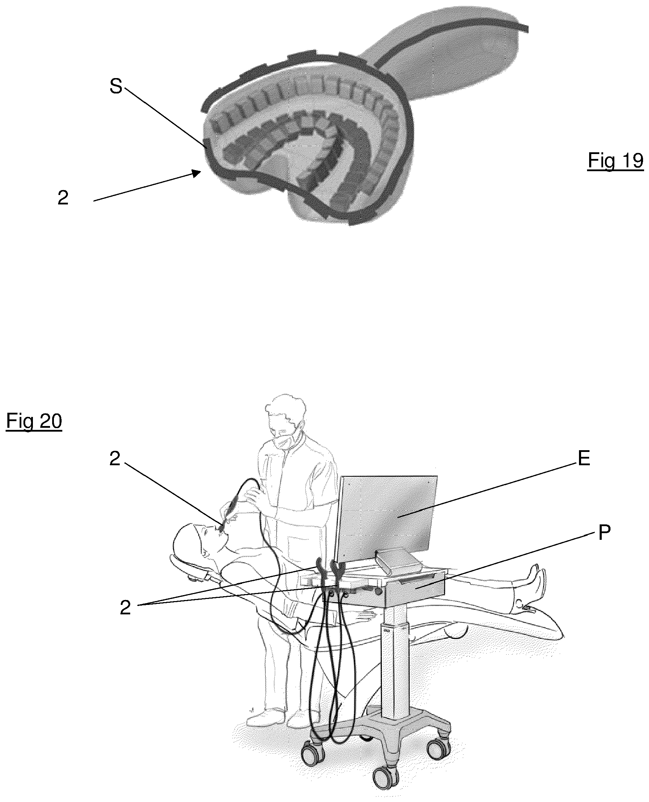

Durant la prise de vue, peut être adjoint un système S d'aspiration salivaire et/ou de projection d'eau et ou d'air permettant de maintenir le plus net possible la zone mesurée hors salive, sang ou buée. Ces systèmes, dont la source des fluide, aspiration ou énergétique sont toujours présents sur l'unit dentaire seront adaptable sur tout ou partie (par exemple périphérie) du porte empreinte, tel que cela est représenté schématiquement sur la figure 19.

Pour compléter le conditionnement de la zone mesurée, il peut être prévu des moyens de réchauffement du porte-empreinte et/ou de la paroi transparente.

En référence maintenant à la figure 20 on peut voir une installation de prise d'empreinte optique dans son ensemble. Cette installation comporte un ordinateur P de traitement des images captées équipé d'un écran de visualisation E. elle comporte de plus un ou plusieurs porte-empreintes selon l'invention, en l'occurrence plusieurs, est connectés de manière filaire, sachant qu'il est également possible d'une connexion sans fil de type par réseau WIFI, Bluetooth ou tout autre.

Le déclenchement de la prise de vue peut être réalisé par bouton, vocalement ou à l'aide d'une pédale par le praticien D ou par un bouton pour le patient P.

En référence maintenant aux figures 21a et 21b, on peut voir que le porte-empreinte 2 peut être en une seule partie ou en deux parties, c'est-à-dire que la partie active 21 peut être indépendante, en sorte d'alléger la partie proche de la bouche. Pour cela on procède à une répartition optimisée des composants électroniques. Dans le cas d'un porte-empreinte en deux parties, la partie active 21 étant reliée au reste du porte-empreinte ou à l'ordinateur, non visible, au travers d'un fil F, de préférence par un système de communication sans fil.

## Revendications

1. Porte-empreinte électronique (1) utilisable pour la prise de mesures tridimensionnelles et temporelles dans le domaine dentaire, il consiste en un dispositif comprenant des systèmes de capteurs de mesure optique (C), un système électronique qui comporte une unité centrale de gestion apte à collecter, stocker et ordonner les données relevées par lesdits capteurs, tandis que lesdits capteurs sont répartis sur tout ou partie dudit porte-empreinte pour permettre de réaliser une empreinte optique de tout ou partie d'une arcade dentaire en une ou plusieurs prises, **caractérisé en ce qu'**il consiste en une pièce (2, 21) présentant la forme de tout ou partie d'une arcade dentaire, et qui comporte des moyens (3) de réglage de profondeur par la prise d'appui sur les dents (D), sur la surface occlusale et/ou sur les surfaces vestibulaires ou linguale, et consistant en au moins une paroi transparente (31 ; 32) s'étendant au-dessus desdits capteurs (C).

2. Porte-empreinte électronique (1) selon la revendication 1, **caractérisé en ce que** la paroi transparente (31 ; 32) est déformable.

3. Porte-empreinte électronique (1) selon la revendication 1 ou la revendication 2, **caractérisé en ce que** la paroi transparente (31) est associée en contact glissant à une autre paroi transparente (32), qui coopère avec des moyens, motorisés ou non, aptes à générer un mouvement de frottement entre lesdites parois transparentes (31, 32).

4. Porte-empreinte électronique (1) selon l'une quelconque des revendications 1 à 3, **caractérisé en ce que** la paroi transparente (31 ; 32) présente des repères (G) de positionnement du porte-empreinte lors de la prise de mesures.

5. Porte-empreinte électronique (1) selon l'une quelconque des revendications 1 à 4, **caractérisé en ce qu'**il est de conception évolutive au travers de facultés de déformabilité et/ou d'une construction en plusieurs éléments (34, 24 ; 25, 26 ; 27 , 28) articulés entre eux et/ou assemblables et solidarisables de manière réversible, en sorte de présenter la forme optimale.

6. Porte-empreinte électronique (1) selon l'une quelconque des revendications 1 à 5, **caractérisé en ce que** les capteurs de mesure optique sont associés à des senseurs à ultrason (U) et/ou OCT (optique cohérente tomographique) (T).

7. Porte-empreinte électronique (1) selon l'une quelconque des revendications 1 à 6, **caractérisé en ce qu'**il est réalisé en un matériau déformable tel qu'une matière thermoplastique ou une résine souple, ne revenant pas à la forme d'origine après adaptation dans la bouche du patient.

8. Porte-empreinte électronique (1) selon l'une quelconque des revendications 1 à 7, **caractérisé en ce que** sa partie active (21), équipée de capteurs (C), présente une forme adaptée ou adaptable par déformation, aux particularités de l'occlusion.

9. Porte-empreinte électronique (1) selon la revendication 5 ou la revendication 6, **caractérisé en ce qu'**il est réalisé en au moins deux éléments solidarisables (23, 24 ; 25, 26 ; 27 , 28), chacun adapté à la prise d'empreinte d'au moins une partie d'une arcade, et **en ce que** lesdits au moins deux éléments (23, 24 ; 25, 26 ; 27 , 28) sont configurés en sorte que des capteurs (C) d'au moins l'un d'eux s'associent à des capteurs d'un autre élément, de manière que l'empreinte optique d'au moins une partie de l'arcade soit réalisée avec des capteurs desdits au moins deux éléments (23, 24 ; 25, 26 ; 27 , 28).

10. Porte-empreinte électronique (1) selon la revendication 9, **caractérisé en ce que** les au moins deux éléments solidarisables (23, 24 ; 25, 26 ; 27 , 28), sont conformés pour être solidarisés, de manière réversible, par emboîtement.

11. Porte-empreinte électronique (1) selon la revendication 9, **caractérisé en ce que** les au moins deux éléments solidarisables (23, 24 ; 25, 26 ; 27 , 28), sont conformés pour être solidarisés magnétiquement.

12. Porte-empreinte électronique (1) selon l'une quelconque des revendications 1 à 11, **caractérisé en ce qu'**il comporte un système (S) d'aspiration périphérique et /ou central, et/ou un système de jet d'eau et/ou de d'air.

13. Porte-empreinte électronique (1) selon l'une quelconque des revendications 1 à 12, **caractérisé en ce qu'**il comporte des moyens de projection de lumière passive, non structurée, pour éclairer l'intérieur de la bouche.

14. Porte-empreinte électronique (1) selon l'une quelconque des revendications 1 à 13, **caractérisé en ce qu'**il est de couleur noire afin de ne pas gêner la prise d'informations.

15. Porte-empreinte électronique (1) selon l'une quelconque des revendications 1 à 14, **caractérisé en ce que** sa partie (21) comportant les capteurs (C), est désolidarisée du reste du porte-empreinte (2) et connectée à ce dernier au travers de moyens filaires (F) ou d'un système de communication sans fil.
